(19) **Europäisches Patentamt / European Patent Office / Office européen des brevets**

(11) **EP 3 647 816 A1**

(12) # EUROPEAN PATENT APPLICATION

(43) Date of publication:
**06.05.2020 Bulletin 2020/19**

(21) Application number: **18203542.8**

(22) Date of filing: **30.10.2018**

(51) Int Cl.:
**G01S 13/90** (2006.01)  **G01S 7/41** (2006.01)
**G06K 9/00** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Christian-Albrechts-Universität zu Kiel 24118 Kiel (DE)**

(72) Inventors:
- **Dr. Taravat, Alireza**
  **24098 Kiel (DE)**
- **Prof. Dr. Oppelt, Natascha**
  **24098 Kiel (DE)**

(74) Representative: **Maiwald Patent- und Rechtsanwaltsgesellschaft mbH Elisenhof Elisenstraße 3 80335 München (DE)**

(54) **GRASSLAND MONITORING BY EARTH OBSERVATION TECHNOLOGIES**

(57) The invention relates to a method and a system for determining a mowing-status of a cultivated area, particularly of grassland. The method for determining a mowing-status of a cultivated area (150), comprises the steps of:
- Capturing, by means of a Synthetic-Aperture Radar, SAR, sensor (220, 260), a first image (321) representing a radar backscattering intensity of the cultivated area (150) at a first moment;
- Determining, by means of a first program, a texture (324, 364) of the cultivated area (150) at the first moment, based on the first image (321);
- Capturing, by means of the SAR sensor (220, 260), a second backscattering intensity image (322) of the cultivated area (150) at a second moment;
- Determining a probability of the mowing-status of the cultivated area (150) as an output (490) of a trained Artificial Neural Network, ANN (400),
wherein the output (490) is based on an input (410) of the ANN (400), wherein the input (410) of the ANN (400) comprises the first (321) and the second (322) backscattering intensity image, and the texture (324, 364).

Fig. 1

**Description**

The invention relates to a method and a system for determining a mowing-status of a cultivated area, particularly of grassland. Furthermore, the invention relates to a program element and a computer readable medium.

Background of the Invention

Agricultural products play an enormous role for ecology and economy of a country. Particularly grassland ecosystems support humankind as well as fauna and flora worldwide by providing numerous goods and services such as forage for livestock, wildlife habitats, and biodiversity conservation. Furthermore, agricultural products are becoming an extensive source for biofuel and direct bioenergy production. To balance ecology and economy, some countries pay subsidies to farmers that do not mow their grassland or, for instance, mow it in longer intervals or not within some periods.

With this background, it is object of the present invention to provide a method and a system that is able to determine the mowing-status of a cultivated area, particularly of grassland, and to determine further the mowing date of this cultivated area.

This objective is solved by a method according to claim 1, a system according to claim 14, a program element, and a computer-readable device. Further embodiments are incorporated in the dependent claims.

Description of the Invention

An aspect of this invention relates to a method for determining a mowing-status of a cultivated area, which comprises following steps:

-    Capturing, by means of a Synthetic-Aperture Radar, SAR, sensor, a first image representing a radar backscattering intensity of the cultivated area at a first moment;
-    Determining, by means of a first program, a texture of the cultivated area at the first moment, based on the first image;
-    Capturing, by means of the SAR sensor, a second backscattering intensity image of the cultivated area at a second moment; and
-    Determining a probability of the mowing-status of the cultivated area as an output of a trained artificial neural network, ANN, wherein the output is based on an input of the ANN, wherein the input of the ANN comprises the first and the second backscattering intensity image, the texture, the first temperature, and the first precipitation.

The cultivated area comprises plants like grass or similar plants like wheat or rye. The mowing-status comprises the status "mown" and "not-mown", wherein "mown" means that the plants have been cut significantly.

Synthetic-aperture radar, SAR, is a form of radar that is used to create two- or three-dimensional images of objects, such as landscapes. SAR uses the motion of the radar antenna over a target region to provide finer spatial resolution than conventional beam-scanning radars. SAR-devices may be mounted on an airplane or on a satellite. Particularly, SAR-devices run by the European Space Agency (ESA) may be used, e.g. SAR-devices mounted on satellites of the Copernicus programme, which includes satellites of the Sentinel family. SAR-devices or sensors may use frequencies in the so-called X-band (12 - 7.5 GHz, 2.5 - 4 cm), C-band (7.5 - 3.75 GHz, 4 - 8cm), S-band (3.75 - 2 GHz, 8 - 15 cm), or L-band (2 - 1 GHz, 15 - 30 cm). The resolution of the cultivated area area, where the mowing-status is determined for, may depend on the wavelength of the SAR. The spatial resolution using a C-band SAR may comprise an area in a range of about between 10 x 10 m and 0.3 x 0.3 m, particularly 1 x 1 m (m: meter).

The SAR-devices or sensors capture images of the earth's surface. Thus, the SAR sensor captures a first image representing a radar backscattering intensity of the area of interest, which comprises the cultivated area. The image may be image raw-data or a pre-processed image. The SAR sensor captures the first image at a first moment. The first moment may be a most recent point in time, e.g. "today" or "right after having received the first image".

Furthermore, the first image is taken as a basis to determine, by means of a first program, a texture of the cultivated area. The texture is a property that represents the surface and structure of an image. The texture may be considered as a measure, e.g., for a roughness of the first image. The texture may be one value or a vector or matrix of values. If, for instance, the first image shows a field of image-pixels, within the cultivated area, that differ strongly from their neighbouring image-pixels, then the texture of the cultivated area in a sub-area comprising of these image-pixels, has a high value. The same is true, mutatis mutandis, for image-pixels that differ weakly from their neighbouring ones.

Besides, a second backscattering intensity image is captured by the SAR sensor, at a second moment. The SAR sensor may be the same SAR sensor that captures the first image or may be a different SAR sensor of the same or similar type; "similar type" means that the second image is comparable to the first image. As an example, the first image may be taken by a first satellite and the second image may be taken by a second satellite, where the first and the second satellite belong to one satellite-family. For instance, satellites Sentinel-1A and Sentinel-1B belong to the same satellite-family.

The second moment differs from the first moment. The second moment lies further in the past than the first moment. A time-difference between the first and the second moment may be a couple of days. For instance, in cases where the satellites Sentinel-1A and Sentinel-1B carry the SAR sensors, the time-difference may be 6 days, 9 days, or 12 days, depending on which sensor is capturing the images. The second image may be stored on a private intermediate storage or be retrieved from a public data source.

In addition, a probability of the mowing-status of the cultivated area is determined as an output of a trained Artificial Neural Network (ANN). The ANN may have been trained by a series of first backscattering intensity images, in combination with a measure for their texture, and second backscattering intensity images. The trained ANN may have been bought, taken from public sources, or have been trained by an own method, for example by a method as explained below. The probability of the mowing-status of the cultivated area, as output by the ANN, may be post-processed by a threshold-device, which determines that a probability above a predefined threshold considers a cultivated area as "mown" and below the threshold as "not-mown". The predefined threshold may lie between 30 % and 70 %, e.g. at 50 %. The plantation may comprise more than one sub-area, so that one sub-area may be considered to be "mown" and another sub-area as "not-mown"; then, the plantation may either be considered as "partly mown" or, in a simpler model, as "mown" (e.g., if more than 50 % of the area is considered to be "mown"). The output of the trained ANN is based on an input of the ANN that comprises the first and the second backscattering intensity image, and the texture.

The trained ANN is preferred to an algorithmic solution, because it turned out that the relation between the output "mowing-status of a cultivated area" and the input-parameters - as listed above - shows a high degree or a variety of nonlinear behaviours that are not easy to be modelled and, as a result, be expressed by an algorithm. There are different remote sensing techniques and models for biophysical, physiological or biochemical canopy parameter estimation. In general, agricultural cropland yield estimation models using earth observation data are categorized as either theoretical or experiential models. Theoretical models simulate the response relationship between yield and environmental factors using complex differential equations. To make them solvable, many scientists simplify these equations. Experiential approaches are considered as more practical alternatives. Among these, nonlinear algorithms (particularly machine learning approaches) deliver significantly better performance than, for instance, linear models, multiple linear regressions and/or simple nonlinear analyses. This is specifically true in strictly nonlinear, complicated systems such as crop yield estimation. In a series of tests, different combinations of input variables and parameters for each model have been evaluated; the ones with lower RMSE (Root Mean Square Error) and higher R-squared values are selected for further processing. RMSE and R-squared values established between the multi-layered feedforward perceptions modelled output and the desired output, by using a gradient search technique. As a result of the approach used by this invention, an easy-to-handle method with a good determining-result of the mowing-status of the cultivated area captured is achieved.

In an embodiment, the method further comprising the step of obtaining a first temperature of the cultivated area at the second moment and a first precipitation of the cultivated area at the first moment from a database, wherein determining the probability of the mowing-status of the cultivated area comprises the first temperature and the first precipitation as an additional input of the ANN.

The database used to obtain the first temperature and the first precipitation may be a publicly available database of weather history. The first temperature and the first precipitation may be taken from the same database, or different ones, or may use averaged values of different databases. The precipitation may comprise rain, snow, hail, or other forms of precipitation that have fallen onto the cultivated area. Special precipitation forms like hail may influence the cultivated area in a significant way, e.g. by laying down the cultivated area, and therefore may be treated in a special way, for instance by excluding days of hail. The first moment is the same date as the first moment where the first image is captured, but there may be differences of a few hours or, at the most, of one day. These differences may be caused, e.g. by insufficient availability of data from the database and the SAR sensor at exactly the same point in time. The second moment lies in the past and is roughly the same date as the second moment at which the second has been captured. However, there may be differences of a few hours or, at the most, of three days. By considering this further information, the determining-result of the mowing-status may be further improved.

In an embodiment, the method further comprises the step of capturing, by means of the SAR sensor, a third backscattering intensity image of the cultivated area at a third moment, wherein determining the probability of the mowing-status of the cultivated area comprises the third backscattering intensity image as an additional input of the ANN.

The third backscattering intensity image may be captured by the same or a different (but similar in type) SAR sensor than the SAR sensor to capture the first and/or the second image. The third moment lies more in the past than the second moment. The time span between the second and the third moment may be roughly the same as the time span between the first and the second moment. By considering this further information, the determining-result of determining the mowing-status may be improved further.

In an embodiment, the method further comprises the step of obtaining, from the database, a second temperature of the cultivated area at the first moment, and a second precipitation of the cultivated area at the second moment; and capturing, by means of a clock, a month of the first moment, wherein determining the probability of the mowing-status of the cultivated area comprises, additionally, at least one of the second temperature, the second precipitation, and/or the month as an additional input of the ANN.

By considering these further pieces of information, the determining-result of determining the mowing-status may be further improved and/or the data delivered by this invention become easier to handle.

In an embodiment, wherein capturing the first, the second and, if available, the third backscattering intensity image, comprises a vertical transmit and vertical receive polarization, VV, and a vertical transmit and horizontal receive polarization, VH, of the radar backscattering intensity image.

To consider the polarization of the backscattering intensity may increase the effort that has to be spent. Particularly, each of the capturing of the first, the second and, if available, the third backscattering intensity image has to be doubled, because the related steps are done both for VV and VH images. Consequently, the determining (or computation) of the texture, by means of a first program, has to be done both for the first VV image and the first VH image. The increased effort, however, may have a significantly positive effect on the result of determining the mowing-status. The VV polarization is sensitive to the volume scattering of the cultivated area, particularly of grassland. The signal strength sensitivity is clearly higher in the VV than in the VH polarization. In the VH polarization, a lower soil moisture sensitivity may be observed, due to the higher sensitivity of the radar signals to the volume component of medium scattering. Therefore, VH polarization may help to distinguish soil from the vegetation with low amount of biomass.

In an embodiment, the texture of the cultivated area comprises at least of one of the following: a homogeneity of the first image, an entropy of the first image, a contrast of the first image, and/or a dissimilarity of the first image.

The homogeneity of the first image is defined as

$$\sum_{i=1}^{Gr}\sum_{j=1}^{Gr}\frac{1}{(i-j)^2+1}*DN_{ij} \qquad (\text{Eq. 1})$$

where i and j represents the x- and y-positions of the Digital Numbers (DN), and the Digital Numbers represent the intensity of a pixel, i.e. the image-pixels or 3x3-filed of image-pixels in the image, respectively. The homogeneity provides a means to judge how similar a field of image-pixels, within the cultivated area, is to their neighbouring image-pixels. Homogeneity weights values by the inverse of the Contrast weight, with weights decreasing exponentially away from the diagonal.

The entropy of the first image is defined as

$$\sum_{i=1}^{Gr}\sum_{j=1}^{Gr}\log(DN_{ij})*DN_{ij} \qquad (\text{Eq. 2}).$$

The entropy measures the disorder of an image and it achieves its largest value when all DN in 3x3 matrix are equal.

The contrast of the first image is defined as

$$\sum_{i=1}^{Gr}\sum_{j=1}^{Gr}(i-j)^2*DN_{ij} \qquad (\text{Eq. 3}).$$

The dissimilarity of the first image is defined as

$$\sum_{i=1}^{Gr}\sum_{j=1}^{Gr}|i-j|*DN_{ij} \qquad (\text{Eq. 4}).$$

Dissimilarity result in larger numbers for more windows showing more contrast.

These definitions provide a clear quantification of the notion of "texture of the cultivated area" and, thus, help to fed the ANN with a highly differentiated input.

In an embodiment, capturing the backscattering intensity image of the cultivated area comprises at least one of the following pre-processing steps:

- Removing thermal noise of the image. This is advantageous, because the proposed model relies on highly accurate radiometric values.
- Improving a position accuracy of the image, wherein the image represents the position of the cultivated area. To improve the co-registration accuracy, a precise orbit model may be applied on each image. Application of the precise orbit model provides information about the geometric location of the SAR images improves the position accuracy during co-registration.

- Calibrating the image to radar brightness $\beta_o$.
- Applying radiometric terrain flattening of the cultivated area to the image. Radiometric terrain flattening using SRTM 3 sec data and bilinear interpolation may be applied to the dataset in order to increase the accuracy of the acquisition geometry.
- Applying speckle filtering to the image. For speckle filtering, a $3 \times 3$ Lee filter may be applied to the images and then it may be georeferenced using a digital terrain model (Range Doppler Terrain Correction, SRTM) and re-projected to UTM WGS84.
- Transforming the corrected intensity image to a logarithmic scale (unit dB).

Furthermore, the data may be exported to GeoTIFF (unsigned 8bit) format.

In an embodiment, the ANN is a MultiLayer Perceptron neural network, MLP. In a series of experiments, the performance of MLP neural networks, RBF (Radial Basis Function) neural networks and SVM (Support Vector Machines) models have been examined. As a result, MLP neural network turned out to be the best-suited model for information retrieval in the field of remote sensing data. Using these tools, MLP networks comprising between 15 and 40, particularly between 20 and 35, for instance between 25 and 32, hidden layers were best-suited ones.

The invention further relates to a program element for executing the methods as described above, when running the program element on a processing unit and/or an ANN.

The invention further relates to a method for training an artificial neural network, ANN, for determining a mowing-status of a cultivated area, comprising the steps of:

- Using a first, a second, and a third backscattering intensity image, a texture, a first temperature, and a first precipitation of the cultivated area as an input of the ANN. The first, second, and third backscattering intensity images may be taken from a repository comprising SAR data from airplanes and/or satellites, at different points in time. The texture may be determined from data of the first image. The temperature and precipitation data may be retrieved from a public database.
- Determining a probability of the mowing-status of the cultivated area as an output of the ANN. The resolution of the area of the cultivated area, where the determining is relates to, may depend on the resolution of the images.
- Obtaining, from a repository, an in-situ data of the mowing-status of the cultivated area. The in-situ data may include wet and dry above-ground biomass and grass-cutting status (uncut and cut, correspond to as "mown" and "not-mown") obtained on sampling patches of about one $m^2$ for each file. Samples may have been cut and weighted to retrieve wet biomass. Dry biomass may have been obtained after drying the samples in a drying chamber for 20 hours at a temperature of $105°$ C.
- Comparing, by means of a comparator module, a probability of the mowing-status of the cultivated area with the in-situ data of the mowing-status of the cultivated area. The comparing may be considered as a comparison of real-world data (e.g. the in-situ data) to the data of the ANN.
- Feeding, as a further input of the ANN, the ANN with a result of the comparison. In this step, the ANN is rewarded by a good estimation and punished by a bad estimation.
- Continuing the above steps, until the result of the comparison fulfils a predefined quality-criterion. The ANN continues learning, as long as it is in the learning phase. The learning phase may use, for instance, a series of 10 to 1000 samples, particularly around 100 samples. The quality-criterion may be a very simple one, e.g. a predefined number of samples. The quality-criterion may be based on the results of the comparison, e.g. until a value and/or a gradient falls below a predefined value.

The invention further relates to a program element for executing the method of training the ANN, when running the program element on a processing unit and/or on an ANN.

The invention further relates to a computer readable medium, where the program element or the trained network is stored on.

The invention further relates to a method for determining a mowing-status of a cultivated area as described above and in the examples, using a trained ANN, as described above and in the examples.

The invention further relates to a system for determining a mowing-status of a cultivated area, particularly of a field growing grass, the system comprising:

a processing unit, which is configured to

- capture, by means of a synthetic-aperture radar, SAR, sensor, a first image representing a backscattering intensity of the cultivated area at a first moment;
- determine, by means of a first program, a texture of the cultivated area at the first moment;

- capture, by means of the SAR sensor, a second backscattering intensity image of the cultivated area at a second moment; and
- obtain, from a database, a first temperature of the cultivated area at the second moment and a first precipitation of the cultivated area at the first moment; and

a trained artificial neural network, ANN, which is configured to

- use the first and the second backscattering intensity image, the texture, the first temperature, and the first precipitation as an input of the ANN; and
- to determine a probability of the mowing-status of the cultivated area as an output of the ANN.

In an embodiment, the processing unit is further configured to obtain, from a database, a second temperature of the cultivated area at the first moment, and a second precipitation of the cultivated area at the second moment.

In an embodiment, the system further comprises a repository, which is configured to obtain an in-situ data of the mowing-status of the cultivated area, and a comparator module, which is configured to compare the probability of the mowing-status of the cultivated area with the in-situ data of the mowing-status of the cultivated area.

The invention further relates to a use of a method as described above and in the examples for determining a mowing-status of a cultivated area where grass is growing.

Description of the Embodiments

The figures depict:

| | |
|---|---|
| **Fig. 1** | a schematic diagram of a system according to an embodiment of the invention; |
| **Fig. 2a** | an exemplary SAR-image of a not-mown cultivated area; |
| **Fig. 2b** | an exemplary SAR-image of a mown cultivated area; |
| **Fig. 3** | a schematic flow diagram of a method for determining a mowing-status of a cultivated area according to an embodiment of the invention; |
| **Fig. 4** | a schematic diagram of an ANN according to an embodiment of the invention; |
| **Fig. 5** | a schematic diagram of a variation the number of hidden nodes in an ANN according to an embodiment of the invention; |
| **Fig. 6** | a schematic diagram of an ANN during a training phase according to an embodiment of the invention; |
| **Fig. 7** | a schematic flow diagram of a method for training an ANN according to an embodiment of the invention. |

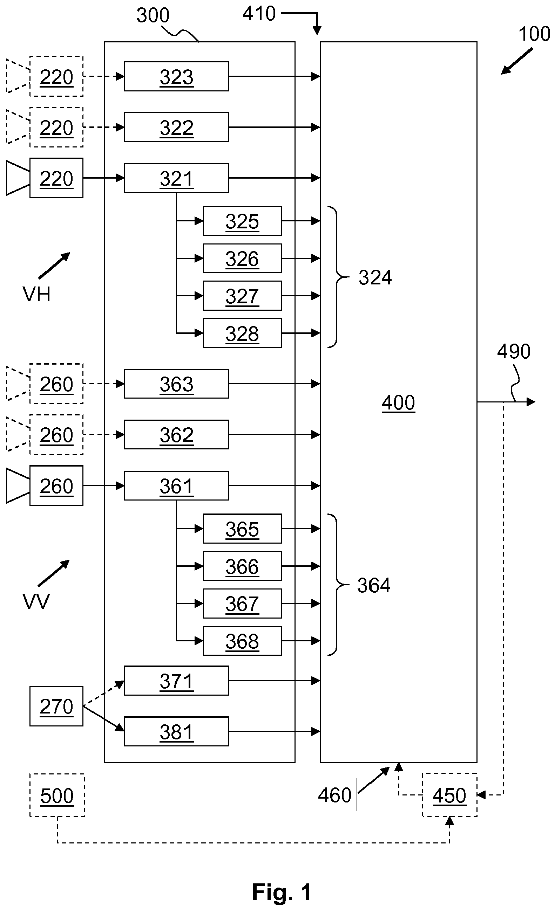

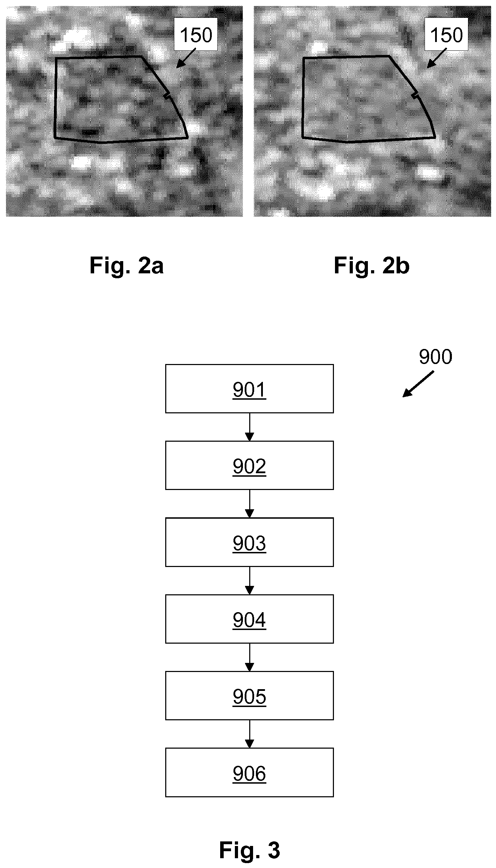

**Fig. 1** depicts a schematic diagram of a system 100 according to an embodiment of the invention. The system 100 comprises a synthetic-aperture radar, SAR, sensor 220 for VH and a SAR sensor 260 for VV of a cultivated area 150 (see **Fig. 2**). The SAR sensors that capture a first image 321, 361 at a first moment are drawn with uninterrupted lines. The SAR sensors that capture images in the past are drawn with broken lines, particularly the SAR sensors that capture a second image 322 and 362 and a third image 323 and 363. The first image 321, 361, both for VH and VV, is taken as a base to determine a texture 324, 364. In this embodiment, the texture 324, 364 comprises a homogeneity 325, 365, an entropy 326, 366, a contrast 327, 367 and a dissimilarity 328, 368 of the first image 321, for VH and VV, respectively. The capturing and determining modules are part of a processing unit 300. The processing unit 300 further comprises a module for the first temperature 371 and a first precipitation 381 of the cultivated area 150. The first temperature 371 and the first precipitation 381 are taken, in this embodiment, from a common database 270. The VH images 321, 322, 323, and the VV images 361, 362, 363 and the texture 324, 364 are inputs to an artificial neural network, ANN 400. The ANN 400 determines a probability of the mowing-status of the cultivated area 150 as an output 490. The ANN 400 has also means for a training phase; these means are drawn with broken lines, because the training phase may be in the past. However, in a further embodiment, the training phase of the ANN may include the phase, in which the ANN is "productive", i.e. in the phase where the mowing-status of the cultivated area 150 is already determined. The training phase uses a comparator module 450, which may be part of the ANN or placed outside of it and a repository 500, which is configured to obtain an in-situ data of the mowing-status of the cultivated area 150. The comparator module 450 compares the output 490 of the ANN 400 with the data provided by the repository 500, and it gives rewards and punishments to the ANN 400, based on this comparison.

**Fig. 2a** depicts an exemplary SAR-image of a not-mown cultivated area 150 (highlighted by a line). **Fig. 2b** depicts an exemplary SAR-image of the same cultivated area 150 when it is mown. It is clearly visible that the texture of the not-mown cultivated area 150 is quite different to the texture of the mown cultivated area 150. This texture is transformed into quantitative numbers by the modules that determine the homogeneity 325, 365, the entropy 326, 366, the contrast 327, 367 and the dissimilarity 328, 368 of the first image 321 (cf. **Fig. 1**).

**Fig. 3** depicts a schematic flow diagram 900 of a method for determining a mowing-status of a cultivated area according to an embodiment of the invention. In a step 901, a first image 321, 326 representing a radar backscattering intensity of the cultivated area 150 at a first moment is captured, by means of a synthetic-aperture radar, SAR, sensor 220, 260. The first image 321, 326 may comprise both VV and VH data or only one of them. In a step 902, a texture 324, 364 of the cultivated area 150 at the first moment, based on the first image 321, is determined, by means of a first program. In a step 903, a second backscattering intensity image 322 of the cultivated area 150 at a second moment, is captured, by means of the SAR sensor 220, 260. The SAR sensor may be different from the SAR sensor that captures the first image 321, 326, but it may belong to the same family of sensors. In a step 904, a first temperature 371 of the cultivated area 150 at the second moment and, in a step 905, a first precipitation 381 of the cultivated area 150 at the first moment is obtained from a database 270. In a step 906, a probability of the mowing-status of the cultivated area 150 as an output 490 of a trained artificial neural network, ANN 400, is determined, wherein the output 490 is based on an input 410 of the ANN 400, wherein the input 410 of the ANN 400 comprises the first 321 and the second 322 backscattering intensity image, the texture 324, 364.

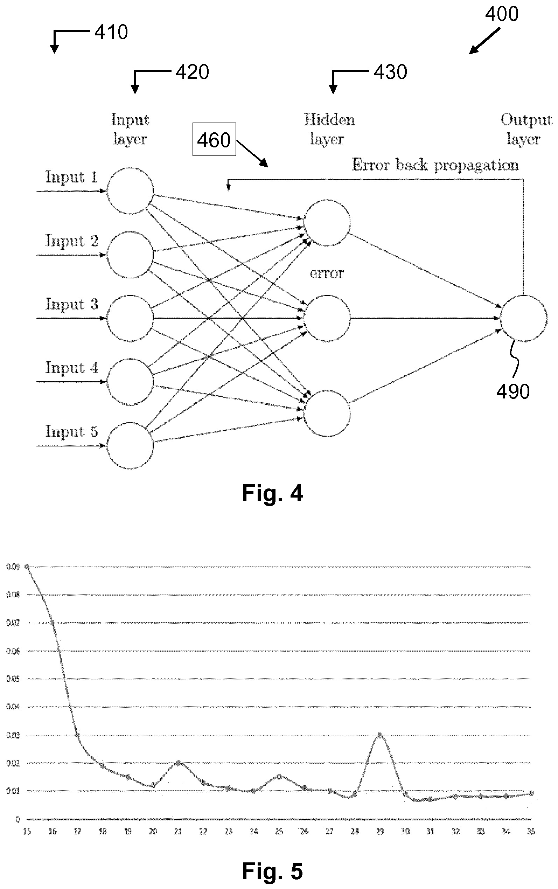

**Fig. 4** depicts a schematic diagram of an ANN 400 according to an embodiment of the invention. The ANN 400 has an input layer 420, which is connected to the inputs 410 of the ANN 400. The input layer 420 is followed by one or more hidden layers 430 that are connected to the layers before, e.g. to the input layer 420 or another hidden layer 430, via edges that represent synaptic weights. The hidden layers 430 may add a bias to the results of this layer. The outputs of the hidden layers 430 are connected to an ANN output 490 that delivers the a probability of the mowing-status of the cultivated area 150. The results of the ANN, from the ANN output 490, are fed back via a further input 460 of the ANN 400, to give rewards and punishments to the ANN 400, based on a comparison, e.g. with real-world data.

**Fig. 5** depicts a schematic diagram of a variation the number of hidden nodes in an ANN 400 according to an embodiment of the invention. The x-axis shows the number of hidden layers 430 (see **Fig. 4**), ranging from 15 to 35 hidden layers. The y-axis represents a Mean Square Error (MSE) of the deviation, based on the comparison of the ANN's output results with, e.g., real-world data. It is clearly visible that increasing the number of hidden layers increases the quality of the output significantly, until about 20 hidden layers are used. Using more than 30 hidden layers brings the ANN to a stable phase, with only smaller improvements. In this example, a minimum is reached when using 31 hidden layers.

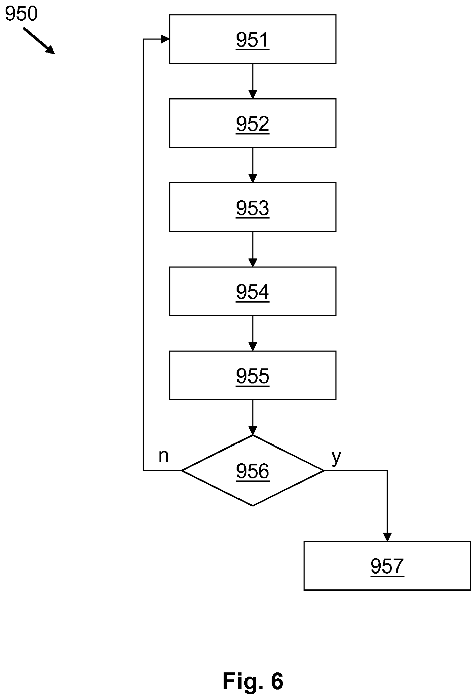

**Fig. 6** depicts a schematic flow diagram 950 of a method for training an ANN 400 according to an embodiment of the invention for determining a mowing-status of a cultivated area 150. In a step 951, a first 321, a second 322, and a third 323 backscattering intensity image, a texture 324, 364, a first temperature, and a first precipitation of the cultivated area 150 are input 410 to the ANN 400. In a step 952, a probability of the mowing-status of the cultivated area 150 as an output 490 of the ANN 400 is determined. In a step 953, an in-situ data of the mowing-status of the cultivated area 150, from a repository 500, is obtained. In a step 954, a probability of the mowing-status of the cultivated area 150 with the in-situ data of the mowing-status of the cultivated area 150, is compared, by means of a comparator module 450. In a step 955, as a further input 460 of the ANN 400, the ANN 400 is fed with a result of the comparison. In a step 956, the quality of the comparison is judged. In case it fulfils a predefined quality-criterion the result can be used, in a step 957. In case the predefined quality-criterion is not fulfilled, the steps 951 to 955 are repeated.

List of Reference Signs

| | |
|---|---|
| 100 | system |
| 150 | plantation |
| 220, 260 | synthetic aperture radar (SAR) VH resp. VV sensor |
| 270 | database |
| 300 | processing unit |
| 321, 361 | first VH resp. VV image representing a backscattering intensity |
| 322, 362 | second image |
| 323, 363 | third image |
| 324, 364 | texture |
| 325, 365 | homogeneity |
| 326, 366 | entropy |
| 327, 367 | contrast |
| 328, 368 | dissimilarity |
| 371 | first temperature |
| 372 | second temperature |
| 381 | first precipitation |

| | |
|---|---|
| 382 | second precipitation |
| 400 | artificial neural network, ANN |
| 410 | input of the ANN |
| 420 | input layer |
| 430 | hidden layer |
| 450 | comparator module |
| 460 | further input of the ANN |
| 490 | ANN output |
| 500 | repository |
| 900, 950 | flow diagram |
| 901 - 906, 951- 956 | steps |

**Claims**

1. A method for determining a mowing-status of a cultivated area (150), comprising the steps of:

    - Capturing, by means of a Synthetic-Aperture Radar, SAR, sensor (220, 260), a first image (321) representing a radar backscattering intensity of the cultivated area (150) at a first moment;
    - Determining, by means of a first program, a texture (324, 364) of the cultivated area (150) at the first moment, based on the first image (321);
    - Capturing, by means of the SAR sensor (220, 260), a second backscattering intensity image (322) of the cultivated area (150) at a second moment;
    - Determining a probability of the mowing-status of the cultivated area (150) as an output (490) of a trained Artificial Neural Network, ANN (400),

    wherein the output (490) is based on an input (410) of the ANN (400), wherein the input (410) of the ANN (400) comprises the first (321) and the second (322) backscattering intensity image, and the texture (324, 364).

2. The method of claim 1, further comprising the step:

    - Obtaining, from a database (270), a first temperature (371) of the cultivated area (150) at the second moment and a first precipitation (381) of the cultivated area (150) at the first moment,

    wherein determining the probability of the mowing-status of the cultivated area (150) comprises the first temperature and the first precipitation as an additional input (410) of the ANN (400).

3. The method of claim 1 or 2, further comprising the step:

    - Capturing, by means of the SAR sensor (220, 260), a third backscattering intensity image (323) of the cultivated area (150) at a third moment,

    wherein determining the probability of the mowing-status of the cultivated area (150) comprises the third backscattering intensity image (323) as an additional input (410) of the ANN (400).

4. The method of any one of the preceding claims, further comprising at least one of the steps of:

    - Obtaining, from the database (270), a second temperature (372) of the cultivated area (150) at the first moment, and a second precipitation (382) of the cultivated area (150) at the second moment; and
    - Capturing, by means of a clock, a month of the first moment,

    wherein determining the probability of the mowing-status of the cultivated area (150) comprises, additionally, at least one of the second temperature, the second precipitation, and/or the month as an additional input (410) of the ANN (400).

5. The method of any one of the preceding claims,
    wherein capturing the first (321), the second (322) and, if available, the third (323) backscattering intensity image, comprises a vertical transmit and vertical receive polarization, VV, and a vertical transmit and horizontal receive

8

polarization, VH, of the radar backscattering intensity image (321, 322, 323).

6. The method of any one of the preceding claims,
   wherein the texture (324, 364) of the cultivated area (150) comprises at least one of:

   > a homogeneity (325, 365) of the first image (321),
   > an entropy (326, 366) of the first image (321),
   > a contrast (327, 367) of the first image (321), and/or
   > a dissimilarity (328, 368) of the first image (321).

7. The method of any one of the preceding claims,
   wherein capturing the backscattering intensity image (321, 322, 323) of the cultivated area (150) comprises at least one of following pre-processing steps:

   > - removing thermal noise of the image (321, 322, 323);
   > - improving a position accuracy of the image (321, 322, 323) representing the position of the cultivated area (150);
   > - calibrating the image (321, 322, 323) to radar brightness;
   > - applying radiometric terrain flattening of the cultivated area (150) to the image (321, 322, 323);
   > - applying speckle filtering to the image (321, 322, 323); and/or
   > - transforming the corrected intensity image (321, 322, 323) to a logarithmic scale.

8. The method of any one of the preceding claims,
   wherein the ANN (400) is a MultiLayer Perceptron neural network, MLP, comprising between 15 and 40, particularly between 20 and 35, for instance between 25 and 32, hidden layers.

9. Program element for executing a method of any one of the preceding claims, when running the program element on a processing unit (300) and/or an artificial neural network, ANN (400).

10. A method for training an Artificial Neural Network, ANN (400), for determining a mowing-status of a cultivated area (150), comprising the steps of:

    > - Using a first (321), a second (322), and a third (323) backscattering intensity image, a texture (324, 364), a first temperature, and a first precipitation of the cultivated area (150) as an input (410) of the ANN (400);
    > - Determining a probability of the mowing-status of the cultivated area (150) as an output (490) of the ANN (400);
    > - Obtaining, from a repository (500), an in-situ data of the mowing-status of the cultivated area (150);
    > - Comparing, by means of a comparator module (450), a probability of the mowing-status of the cultivated area (150) with the in-situ data of the mowing-status of the cultivated area (150);
    > - Feeding, as a further input (460) of the ANN (400), the ANN (400) with a result of the comparison; and
    > - Continuing the above steps, until the result of the comparison fulfils a predefined quality-criterion.

11. Program element for executing the method of claim 10, when running the program element on a processing unit (300) and/or on an ANN (400).

12. Computer readable medium, on which the program element of claim 9 and/or the program element of claim 11 is stored.

13. A method for determining a mowing-status of a cultivated area (150) according to any one of the claims 1 to 8, using a trained ANN (400) according to claim 10.

14. A system (100) for determining a mowing-status of a cultivated area (150), particularly of a field growing grass, the system (100) comprising:

    > a processing unit (300), which is configured to

    > > capture, by means of a synthetic-aperture radar, SAR, sensor (220, 260), a first image (321) representing a backscattering intensity of the cultivated area (150) at a first moment;
    > > determine, by means of a first program, a texture (324, 364) of the cultivated area (150) at the first moment;
    > > capture, by means of the SAR sensor (220, 260), a second backscattering intensity image (322) of the cultivated area (150) at a second moment; and obtain, from a database (270), a first temperature of the cultivated area (150) at the second moment and a first precipitation of the cultivated area (150) at the first moment; and

a trained artificial neural network, ANN (400), which is configured to

use the first (321) and the second (322) backscattering intensity image, the texture (324, 364), the first temperature, and the first precipitation as an input (410) of the ANN (400); and
to determine a probability of the mowing-status of the cultivated area (150) as an output (490) of the ANN (400).

15. The system (100) of claim 14,
wherein the processing unit (300) is further configured to
obtain, from a database (270), a second temperature of the cultivated area (150) at the first moment, and a second precipitation of the cultivated area (150) at the second moment.

16. The system (100) of claim 14 or 15, further comprising:

a repository (500), which is configured to obtain an in-situ data of the mowing-status of the cultivated area (150), and
a comparator module (450), which is configured to compare the probability of the mowing-status of the cultivated area (150) with the in-situ data of the mowing-status of the cultivated area (150).

17. Use of a method according to any one of the claims 1 to 8 or the system (100) of claim 14, 15, or 16 for determining a mowing-status of a cultivated area (150) where grass, wheat or rye is growing.

**Fig. 1**

**Fig. 2a**                    **Fig. 2b**

**Fig. 3**

410

400

420

430

Input
layer

460

Hidden
layer

Output
layer

Error back propagation

Input 1

Input 2

error

Input 3

Input 4

490

Input 5

**Fig. 4**

**Fig. 5**

Fig. 6

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTIAN SCHUSTER ET AL: "Towards Detecting Swath Events in TerraSAR-X Time Series to Establish NATURA 2000 Grassland Habitat Swath Management as Monitoring Parameter", REMOTE SENSING, vol. 3, no. 7, 29 June 2011 (2011-06-29), pages 1308-1322, XP055577233, DOI: 10.3390/rs3071308 * abstract * | 1-17 | INV. G01S13/90 G01S7/41 G06K9/00 |
| A | ALI IFTIKHAR ET AL: "Modeling Managed Grassland Biomass Estimation by Using Multitemporal Remote Sensing Data-A Machine Learning Approach", IEEE JOURNAL OF SELECTED TOPICS IN APPLIED EARTH OBSERVATIONS AND REMOTE SENSING, IEEE, USA, vol. 10, no. 7, 1 July 2017 (2017-07-01), pages 3254-3264, XP011658275, ISSN: 1939-1404, DOI: 10.1109/JSTARS.2016.2561618 [retrieved on 2017-08-09] * abstract * | 1-17 | |
| A | KAUPO VOORMANSIK ET AL: "Towards a detection of grassland cutting practices with dual polarimetric TerraSAR-X data", INTERNATIONAL JOURNAL OF REMOTE SENSING, vol. 34, no. 22, 17 September 2013 (2013-09-17), pages 8081-8103, XP055577211, GB ISSN: 0143-1161, DOI: 10.1080/01431161.2013.829593 * abstract * | 1-17 | TECHNICAL FIELDS SEARCHED (IPC) G01S G06K |

-/--

The present search report has been drawn up for all claims

| Place of search | Date of completion of the search | Examiner |
|---|---|---|
| Munich | 3 April 2019 | Rudolf, Hans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 3

Europäisches
Patentamt

European
Patent Office

Office européen
des brevets

# EUROPEAN SEARCH REPORT

Application Number

EP 18 20 3542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VOORMANSIK KAUPO ET AL: "Observations of Cutting Practices in Agricultural Grasslands Using Polarimetric SAR", IEEE JOURNAL OF SELECTED TOPICS IN APPLIED EARTH OBSERVATIONS AND REMOTE SENSING, IEEE, USA, vol. 9, no. 4, 1 April 2016 (2016-04-01), pages 1382-1396, XP011609093, ISSN: 1939-1404, DOI: 10.1109/JSTARS.2015.2503773 [retrieved on 2016-03-03] * abstract * | 1-17 | |
| A | BRIAN BARRETT ET AL: "Assessment of multi-temporal, multi-sensor radar and ancillary spatial data for grasslands monitoring in Ireland using machine learning approaches", REMOTE SENSING OF ENVIRONMENT., vol. 152, 1 September 2014 (2014-09-01), pages 109-124, XP055577161, XX ISSN: 0034-4257, DOI: 10.1016/j.rse.2014.05.018 * the whole document * | 1-17 | |

-/--

TECHNICAL FIELDS
SEARCHED      (IPC)

The present search report has been drawn up for all claims

| Place of search | Date of completion of the search | Examiner |
|---|---|---|
| Munich | 3 April 2019 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 20 3542

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZALITE KARLIS ET AL: "Monitoring of Agricultural Grasslands With Time Series of X-Band Repeat-Pass Interferometric SAR", IEEE JOURNAL OF SELECTED TOPICS IN APPLIED EARTH OBSERVATIONS AND REMOTE SENSING, IEEE, USA, vol. 9, no. 8, 1 August 2016 (2016-08-01), pages 3687-3697, XP011621374, ISSN: 1939-1404, DOI: 10.1109/JSTARS.2015.2478120 [retrieved on 2016-08-30] * the whole document * ----- | 1-17 | |
| A | WO 2011/102520 A1 (PASCO CORP [JP]; SHIMAMURA HIDEKI [JP] ET AL.) 25 August 2011 (2011-08-25) * the whole document * ----- | 1-17 | |

TECHNICAL FIELDS
SEARCHED        (IPC)

The present search report has been drawn up for all claims

| Place of search | Date of completion of the search | Examiner |
|---|---|---|
| Munich | 3 April 2019 | Rudolf, Hans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 20 3542

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2019

| Patent document cited in search report | Publication date | Patent family member(s) | Publication date |
|---|---|---|---|
| WO 2011102520 A1 | 25-08-2011 | JP 2011167163 A <br> WO 2011102520 A1 | 01-09-2011 <br> 25-08-2011 |

EPO FORM P0459

For more details about this annex : see Official Journal of the European Patent Office, No. 12/82